# EUROPEAN PATENT APPLICATION

(11) **EP 4 099 445 A1**
(43) Date of publication of application: **07.12.2022**
(21) Application number: 21873708.8
(22) Date of filing: 22.09.2021
(51) Int. Cl.: H01M 4/36, H01M 4/485, H01M 4/62, H01M 4/131, H01M 10/0525, C01B 33/32

(54) **COMPOSITE MATERIAL AND PREPARATION METHOD THEREFOR, CATHODE MATERIAL, AND LITHIUM ION BATTERY**

(30) Priority: 14.04.2021 CN 202110401884
(71) Applicant: BTR NEW MATERIAL GROUP CO., LTD., Shenzhen, Guangdong 518106 (CN); Dingyuan New Energy Technology Co., Ltd., Huizhou, Guangdong 516227 (CN)
(72) Inventor: Xie, Wei, Shenzhen, Guangdong 518106 (CN); Pang, Chunlei, Shenzhen, Guangdong 518106 (CN); Ren, Jianguo, Shenzhen, Guangdong 518106 (CN); He, Xueqin, Shenzhen, Guangdong 518106 (CN)
(74) Representative: Meroni, Francesca
(86) International application number: PCT/CN2021/119524
(87) International publication number: WO 2022/217835

(57) **Abstract**

The present application provides a composite material and a preparation method thereof, a negative electrode material, and a lithium ion battery. The negative electrode material includes at least one composite material, and the lithium ion battery includes at least one composite material. The composite material has a core-shell structure composed of an inner core and a hydrophobic coating layer, with the inner core including at least one lithium-containing silicon oxide, and the hydrophobic coating layer being used to cover the inner-core material. The hydrophobic coating layer of the composite material of the present application can effectively protect the inner core containing the lithium-containing silicon oxide, effectively improve the slurry stability of the lithium-containing silicon-oxygen material, and can also effectively buffer the expansion of the composite material during cycling, so that the composite material has good electronic conductivity, high initial Coulombic efficiency, good cycling stability, and high rate capability.

## Description

The present application claims priority to Chinese patent application No. 2021104018841, named "a composite material and a preparation method thereof, a negative electrode material, a negative electrode sheet, and a lithium ion battery", filed with the Chinese Patent Office on April 14, 2021, the entire contents of which are incorporated herein by reference.

### Technical Field

The present application relates to the technical field of batteries, in particular to a composite material and a preparation method thereof, a negative electrode material, and a lithium ion battery.

### Background Art

With the continuous expansion and deepening of the application of lithium ion batteries, there are increasing requirements for the performance of lithium ion batteries, especially in terms of energy density of batteries. Traditional graphite negative electrode materials are no longer enough to meet the growing market demand. As a negative electrode material with high specific capacity, silicon-oxygen material has attracted much attention recently. The specific capacity of silicon-oxygen negative electrode materials exceeds 2000 mAh/g, but compared with graphite materials, silicon-oxygen negative electrode materials have lower initial Coulombic efficiency, poorer electrical conductivity, poorer cycling and rate capability, and the like, which limit the its practical application.

In order to improve the performance of silicon-oxygen materials, enterprises, universities and other related institutions have developed many methods, such as doping lithium element into silicon-oxygen materials. The initial Coulombic efficiency of silicon-oxygen materials can be significantly improved by lithium doping. However, due to the high alkalinity of the silicon-oxygen material doped with lithium, the aqueous slurry, when prepared, is easily unstable, and gas and sediment are easily generated, which affects the production of the battery. Also, the lithium-containing silicon-oxygen material produced has poor electronic conductivity and low initial Coulombic efficiency and rate capability.

### Summary

The present application provides a composite material and a preparation method thereof, a negative electrode material, and a lithium ion battery. The composite material has good electronic conductivity, high initial Coulombic efficiency, good cycling stability, and high rate capability. A negative electrode material and a lithium ion battery made of the composite material have excellent performance.

In a first aspect, the present application provides a composite material, having a core-shell structure, the core-shell structure including:
an inner core, including a lithium-containing silicon oxide; and
a hydrophobic coating layer, formed on at least part of the surface of the inner core and including a compound M having a chemical formula LiₐSiO_{b}X_{c} and a compound N having a chemical formula Li_{d}SiOₑY_{f}, where 0<a≤5, 0<b≤5, 0<c≤5, 0<d≤5, 0<e≤5, 0<f≤5, X is a metal element, and Y is a non-metal element.

In the above solution, the composite material includes the inner core containing a lithium-containing silicon oxide and the hydrophobic coating layer partially or fully covering the inner core and including the compound M having a chemical formula LiₐSiO_{b}X_{c} and the compound N having a chemical formula Li_{d}SiOₑY_{f}. The compound M can enhance the electrical conductivity of the material, and the compound N is chemically interacted with the compound M, that is, the compound N and the compound M are adsorbed to each other due to Coulomb attraction between the charges of the compound molecules or tightly linked by the strong chemical bond therebetween, to stabilize and complete the hydrophobic coating layer. The stable and complete coating layer can more effectively protect the inner core containing the lithium-containing silicon oxide, ensure the slurry stability of the lithium-containing silicon-oxygen material, and more effectively buffer expansion of the composite material during cycling. As a result, the composite material has good electronic conductivity, high initial Coulombic efficiency, good cycling stability, and high rate capability.

In one embodiment, the composite material has at least one of the following items a to g:
a. the inner core has a diameter ϕ that satisfies: 0 µm<ϕ≤500 µm;
b. the lithium-containing silicon oxide includes at least one of silicon-, oxygen-, and lithium-containing compounds, composites of a silicon-, oxygen-, and lithium-containing compound and silicon, composites of an oxygen- and lithium-containing compound and silicon, and composites of an oxygen- and silicon-containing compound and lithium,
   wherein the silicon-, oxygen-, and lithium-containing compound includes at least one of Li₂SiO₃, Li₂Si₂O₅, Li₄SiO₄, Li₆Si₂O₇, and Li₂Si₅O₁₁;
c. the hydrophobic coating layer has a thickness of 2 nm to 500 nm;
d. the hydrophobic coating layer accounts for 0.1 wt% to 10 wt% of the composite material;
e. a mass ratio of the compound M to the compound N in the hydrophobic coating layer is (1 ~100):(1 ~100);
f. the metal element includes at least one of vanadium, germanium, zinc, tin, aluminum, lanthanum, magnesium, beryllium, antimony, silver, calcium, copper, and titanium; and
g. the non-metal element includes at least one of phosphorus, boron, nitrogen, and sulfur.

In the above solution, the composite material obtained by controlling the parameters of the inner core and the hydrophobic coating layer in the composite material has good electronic conductivity, high initial Coulombic efficiency, good cycling stability, and high rate capability.

In one embodiment, the composite material has at least one of the following items a to c:
a. the composite material further includes an outer conductive layer formed on the surface of the hydrophobic coating layer and containing a carbon material;
b. the composite material further includes an outer conductive layer formed on the surface of the hydrophobic coating layer and having a thickness of 50 nm to 2000 nm; and
c. the composite material further includes an outer conductive layer formed on the surface of the hydrophobic coating layer and accounting for 0.1 wt% to 10 wt% of the composite material.

In the above solution, the conductive property of the composite material can be enhanced by preparing the outer conductive layer on the hydrophobic coating layer.

In a second aspect, the present application provides a preparation method of a composite material, including:
calcining a mixture including a silicon oxide and a lithium source in a protective atmosphere or a vacuum environment to obtain a lithium-containing silicon oxide; and
mixing starting materials including the lithium-containing silicon oxide, an X source, and a Y source and sintering them to obtain a composite material, where X is a metal element and Y is a non-metal element.

In the above solution, the lithium-containing silicon oxide is reacted with the X source and the Y source, thereby a stable hydrophobic coating layer is formed in situ on the surface of the lithium-containing silicon oxide, so that the obtained composite material has good electronic conductivity, high initial Coulombic efficiency, good cycling stability, and high rate capability.

In one embodiment, the preparation method has at least one of the following items a to f:
a. the silicon oxide has a chemical formula SiOₓ, where 0<x<2;
b. the lithium source includes at least one of lithium hydride, alkyl lithium, lithium metal, lithium aluminum hydride, lithium amide, and lithium borohydride;
c. a molar ratio of the silicon oxide to the lithium source is (0.5~5):1 (0.5:1~5:1);
d. the calcination is carried out in a protective atmosphere including at least one of helium, neon, argon, and nitrogen;
e. the calcination temperature is 500°C~1000°C, and the calcination duration is 2 h∼10 h; and
f. the lithium-containing silicon oxide includes at least one of silicon-, oxygen-, and lithium-containing compounds, composites of a silicon-, oxygen-, and lithium-containing compound and silicon, composites of an oxygen- and lithium-containing compound and silicon, and composites of an oxygen- and silicon-containing compound and lithium,
wherein the silicon-, oxygen-, and lithium-containing compound includes at least one of Li₂SiO₃, Li₂Si₂O₅, Li₄SiO₄, Li₆Si₂O₇, and Li₂Si₅O₁₁.

In one embodiment, the lithium-containing silicon oxide has at least one of the following items a to d:
a. the X source includes at least one of X-containing oxides and X-containing salt compounds;
b. the Y source includes at least one of Y-containing oxides and Y -containing salt compounds;
c. a molar ratio of the lithium-containing silicon oxide, the X source, and the Y source is 1:(0.001∼0.1):(0.001∼0.1); and
d. the sintering temperature is 300°C to 800°C, and the sintering duration is 2h to 6h.

In one embodiment, the preparation method has at least one of the following items a to c:
a. the preparation method of a composite material further includes: coating the sintered product with carbon to form an outer conductive layer;
b. the preparation method of a composite material further includes: coating the sintered product with carbon to form an outer conductive layer having a thickness of 50 nm to 2000 nm; and
c. the preparation method of a composite material further includes: coating the sintered product with carbon to form an outer conductive layer, with the carbon coating method including: mixing starting materials including the sintered product and the organic carbon source and performing heat treatment on them in a protective atmosphere or a vacuum environment.

In one embodiment, the preparation method has at least one of the following items a to c:
a. the organic carbon source includes at least one of hydrocarbons, resins, rubbers, saccharides, organic acids, and asphalt;
b. the heat treatment temperature is 600°C~1000°C, and the heat treatment duration is 0.5 h~10 h; and
c. the mass ratio of the outer conductive layer to the sintered product is 1:(1∼1000) (1:1-1 :1000).

In a third aspect, the present application provides a negative electrode material including the above composite material or a composite material prepared by the above preparation method.

In a fourth aspect, the present application provides a lithium ion battery including the above negative electrode material.

The present application provides the following beneficial effects.
(1) The composite material of the present application includes the inner core containing a lithium-containing silicon oxide and the hydrophobic coating layer partially or fully covering the inner core. The hydrophobic coating layer can effectively protect the inner core containing the lithium-containing silicon oxide, effectively enhance the slurry stability of the lithium-containing silicon-oxygen material, and effectively buffer expansion of the composite material during cycling. As a result, the composite material has good electronic conductivity, high initial Coulombic efficiency, good cycling stability, and high rate capability.
(2) In the present application, the lithium-containing silicon oxide is reacted with at least one of metal-containing oxides and metal-containing salt compounds and at least one of non-metal-containing oxides and salt compounds, to produce a stable hydrophobic coating layer in situ on the surface of the lithium-containing silicon oxide. The hydrophobic coating layer contains the compound M having a chemical formula LiₐSiO_{b}X_{c} and the compound N having a chemical formula Li_{d}SiOₑY_{f}. The compound M can enhance the electrical conductivity of the material, and the compound N is chemically interacted with the compound M, that is, the compound N and the compound M are adsorbed to each other due to Coulomb attraction between the charges of the compound molecules or tightly linked by the strong chemical bond therebetween, to stabilize and complete the hydrophobic coating layer. The stable and complete coating layer can more effectively protect the inner core containing the lithium-containing silicon oxide, ensure the slurry stability of the lithium-containing silicon-oxygen material, and more effectively buffer expansion of the composite material during cycling. As a result, the composite material has good electronic conductivity, high initial Coulombic efficiency, good cycling stability, and high rate capability.

In addition, the preparation method of the present application is simple, green and non-polluting, and suitable for large-scale production, and has broad market application prospects.

### Brief Description of Drawings

In order to illustrate the technical solutions of the examples of the present application more clearly, the drawings that need to be used in the examples will be briefly introduced. It should be understood that the following drawings show merely some examples of the present application, and should not be considered as limiting the scope of the present application.
FIG. 1 is a schematic structural diagram of the composite material of the present application;
FIG. 2 is a schematic flow chart of the preparation method of the composite material provided by the present application;
FIG. 3 is a graph showing cycling performance of corresponding batteries that are assembled using composite materials obtained in Example 1, Example 2, Comparative Example 1, and Comparative Example 2 under different current densities; and
FIG. 4 is a graph showing the different rate capabilities of corresponding batteries that are assembled using composite materials obtained in Example 1, Example 2, Comparative Example 1, and Comparative Example 2.

### Reference signs:

1 ~ inner core;
2~ hydrophobic coating layer;
3~ outer conductive layer.

### Detailed Description of the Embodiments

In order to facilitate understanding of the present application, the technical solutions of the present application are described in detail below with reference to the examples, and many specific details are set forth in the following description to facilitate thorough understanding of the present application.

However, the present application can be implemented in many other ways different from those described herein, and those skilled in the art can make similar improvements without departing from the connotation of the present application. Therefore, the present application is not limited by the specific implementation disclosed below.

Unless otherwise defined, all technical and scientific terms used herein have the same meaning as commonly understood by one of ordinary skill in the art to which this application belongs. In case of conflict, the items in this specification will apply.

Terms as used herein are exemplified below.

The term "prepared by" is synonymous with "comprising". The terms "comprising", "including", "having", and "containing", or any other variation thereof, as used herein, are intended to cover non-exclusive inclusion. For example, a composition, step, method, article, or device comprising the listed elements is not necessarily limited to those elements, but may include other elements not expressly listed or elements inherent to such composition, step, method, article, or device.

The conjunction "consisting of" excludes any unspecified element, step, or component. If used in a claim, this phrase would make the claim closed to exclude materials other than those described, but with the exception of conventional impurities associated therewith. When the phrase "consisting of" appears in a clause in the body of a claim rather than immediately following the subject matter, it limits only the elements described in that clause; and other elements are not excluded from the claim as a whole.

When an amount, a concentration, or other value or parameter is expressed as a range, preferred range, or a range bounded by a series of upper preferred values and lower preferred values, this should be understood as specifically disclosing all ranges formed by any pair of any upper range limit or preferred value and any lower range limit or preferred values, whether or not the ranges are individually disclosed. For example, when a range "1-5" is disclosed, the described range should be construed to include the ranges "1-4", "1-3", "1-2", "1-2 and 4-5", "1 to 3 and 5", etc. When numerical ranges are described herein, unless stated otherwise, the ranges are intended to include the endpoints and all integers and fractions within the range.

In these examples, unless otherwise indicated, the stated parts and percentages are by mass.

The term "part by mass" refers to a basic measurement unit that represents the mass ratio relationship of multiple components, and 1 part can represent any unit mass, such as 1 g, 2.689 g, and the like. If the part by mass of the A component is a part, and the part by mass of the B component is b part, this means that the ratio of the mass of the A component to the mass of the B component is a:b. Or, the mass of the A component is aK, and the mass of the B component is bK (K is an arbitrary number, indicating a multiple factor). Unmistakably, unlike mass fractions, the sum of parts by mass of all components is not limited to 100 parts.

The term "and/or" is used to indicate that one or both of the stated circumstances may occur, for example, A and/or B includes (A and B) and (A or B).

The present application provides a composite material having a core-shell structure composed of an inner core 1 including at least one lithium-containing silicon oxide (oxide of silicon) and a hydrophobic coating layer 2 for covering material of the inner core 1.

In the above solution, the composite material includes the inner core 1 containing a lithium-containing silicon oxide and the hydrophobic coating layer 2 partially or fully covering the inner core 1. The hydrophobic coating layer 2 can effectively protect the inner core 1 containing the lithium-containing silicon oxide, effectively enhance the slurry stability of the lithium-containing silicon-oxygen material, and effectively buffer expansion of the composite material during cycling. As a result, the composite material has good electronic conductivity, high initial Coulombic efficiency, good cycling stability, and high rate capability.

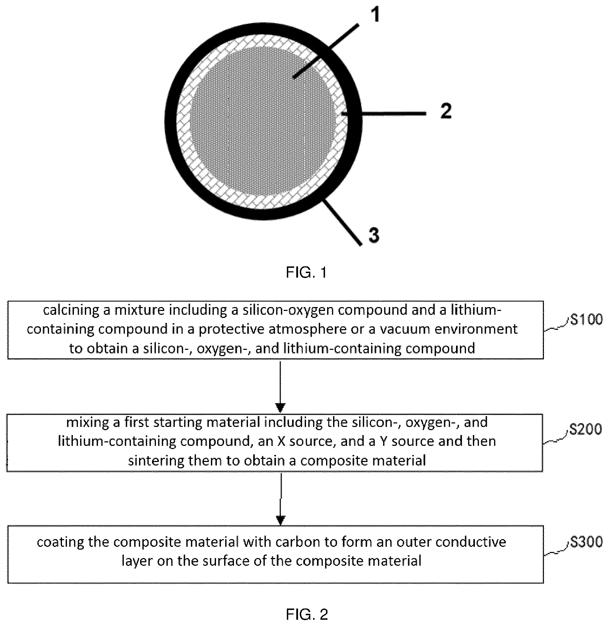

In a first aspect, the present application provides a composite material. FIG. 1 is a schematic structural diagram of the composite material of the present application. As shown in FIG. 1, the composite material has a core-shell structure, including:
inner core 1, containing a lithium-containing silicon oxide, and
a hydrophobic coating layer 2, formed on at least part of the surface of the inner core 1 and including a compound M having a chemical formula LiₐSiO_{b}X_{c} and a compound N having a chemical formula Li_{d}SiOₑY_{f}, where 0<a≤5, 0<b≤5, 0<c≤5, 0<d≤5, 0<e≤5, 0<f≤5, X is a metal element, and Y is a non-metal element.

In the above solution, the composite material includes the inner core 1 containing a lithium-containing silicon oxide and the hydrophobic coating layer 2 partially or fully covering the inner core 1. The hydrophobic coating layer 2 can effectively protect the inner core 1 containing the lithium-containing silicon oxide, enhance the slurry stability of the lithium-containing silicon-oxygen material, and buffer expansion of the composite material during cycling. The above hydrophobic coating layer 2 contains the compound M having a chemical formula LiₐSiO_{b}X_{c} and the compound N having a chemical formula Li_{d}SiOₑY_{f}. The compound M can enhance the electrical conductivity of the material, and the compound N is chemically interacted with the compound M, that is, the compound N and the compound M are adsorbed to each other due to Coulomb attraction between the charges of the compound molecules or tightly linked by the strong chemical bond therebetween to stabilize and complete the hydrophobic coating layer 2. The stable and complete coating layer can more effectively protect the inner core 1 containing the lithium-containing silicon oxide, ensure the slurry stability of the lithium-containing silicon-oxygen material, and more effectively buffer expansion of the composite material during cycling. As a result, the composite material has good electronic conductivity, high initial Coulombic efficiency, good cycling stability, and high rate capability.

In some embodiments, the lithium-containing silicon oxide includes at least one of silicon-, oxygen-, and lithium-containing compounds, composites of a silicon-, oxygen-, and lithium-containing compound and silicon, composites of an oxygen- and lithium-containing compound and silicon, and composites of an oxygen- and silicon-containing compound and lithium,
wherein the silicon-, oxygen-, and lithium-containing compound includes at least one of Li₂SiO₃, Li₂Si₂O₅, Li₄SiO₄, Li₆Si₂O₇, and Li₂Si₅O₁₁.

In some embodiments, the mass ratio of the compound M to the compound N in the hydrophobic coating layer 2 is (1∼100):(1∼100).

Specifically, the mass ratio of the compound M and the compound N in the hydrophobic coating layer 2 may be specifically 100:1, 90:1, 80:1, 70:1, 60:1, 50:1, 40:1, 30:1, 20:1, 10:1, 8:1, 5:1, 3:1, 1:1, 1:3, 1:5, 1:8, 1:10, 1:20, 1:30, 1:40, 1:50, 1:60, 1:70, 1:80, 1:90, 1:100, etc., and is not limited here.

It should be noted that, in the above hydrophobic coating layer 2, the mass ratio of the compound M to the compound N needs to be controlled within the above-mentioned range (i.e., (1~100):(1~100)). If the mass ratio is higher than the above-mentioned range, the hydrophobic coating layer 2 has a reduced strength and can neither effectively protect the inner core 1 containing a lithium-containing silicon oxide and improve the slurry stability of the lithium-containing silicon-oxygen material, nor effectively buffer the expansion of the composite material during cycling, such that the composite material has poor electronic conductivity, initial Coulombic efficiency, cycling stability, and rate capability. If the mass ratio is less than the above-mentioned range, the electric conductivity of the composite material obtained is decreased. Preferably, the mass ratio of the compound M to the compound N is specifically in a range of (5~50):(5~50), within which the hydrophobic coating layer 2 has a high strength and can effectively protect the inner core 1 containing a lithium-containing silicon oxide and improve the slurry stability of the lithium-containing silicon-oxygen material, and effectively buffer the expansion of the composite material during cycling. As a result, the composite material has good electronic conductivity, initial Coulombic efficiency, cycling stability, and rate capability.

In some embodiments, the above metal element includes, but is not limited to, at least one of vanadium, germanium, zinc, tin, aluminum, lanthanum, magnesium, beryllium, antimony, silver, calcium, copper, and titanium. The above non-metal element includes, but is not limited to, at least one of phosphorus, boron, nitrogen, and sulfur.

In some embodiments, the diameter of the inner core 1 is greater than 0 and less than or equal to 500 µm. Optionally, the diameter of the inner core 1 may specifically be 1 µm, 5 µm, 10 µm, 20 µm, 50 µm, 80 µm, 100 µm, 150 µm, 200 µm, 250 µm, 300 µm, 350 µm, 400 µm, 450 µm, 500 µm, etc., and is not limited here.

In some embodiments, the diameter of the inner core 1 may be 2 µm~200 µm. The diameter of the inner core 1 is controlled to be 200 µm or less, which can improve the cycling performance of the composite material, and the diameter of the inner core 1 is controlled to be 2 µm or greater, which can improve the initial Coulombic efficiency of the composite material.

In some embodiments, the thickness of the hydrophobic coating layer 2 is greater than or equal to 2 nm and less than or equal to 500 nm. Optionally, the thickness of the hydrophobic coating layer 2 may specifically be 2 nm, 5 nm, 10 nm, 20 nm, 50 nm, 80 nm, 100 nm, 150 nm, 200nm, 250nm, 300nm, 350nm, 400nm, 450nm, 500 nm, etc.

In some embodiments, the thickness of the hydrophobic coating layer 2 may be 5 nm~200 nm. The thickness of the hydrophobic coating layer 2 is controlled to be 5 nm or greater, which can better protect the inner core 1. When the thickness of the hydrophobic coating layer 2 is controlled to be 200 nm or less, the obtained composite material has excellent electronic conductivity.

In some embodiments, the hydrophobic coating layer 2 accounts for 0.1wt% to 10wt% of the composite material, and the mass fraction of the hydrophobic coating layer 2 in the composite material may specifically be 0.1wt%, 0.5wt%, 1wt%, 3wt%, 5wt%, 8wt%, 10wt%, etc., and is not limited here.

In some embodiments, the composite material further includes an outer conductive layer 3 formed on the surface of the hydrophobic coating layer 2, and the outer conductive layer 3 contains a carbon material. It should be noted that the outer conductive layer 3 contains, but is not limited to, carbon material, and may also be a composite of carbon material and other conductive materials.

In some embodiments, the thickness of the outer conductive layer 3 is greater than 50 nm and less than or equal to 2000 nm. Optionally, the thickness of the outer conductive layer 3 may specifically be 50nm, 100nm, 200nm, 300nm, 400nm, 500nm, 600nm, 700nm, 800nm, 900nm, 1000nm, 1100 nm, 1200 nm, 1300 nm, 1400 nm, 1500 nm, 1600 nm, 1700 nm, 1800nm, 1900 nm, 2000 nm, etc., and is not limited here. The electrical conductivity of the composite material is guaranteed without deterioration due to the presence of the hydrophobic coating layer 2. When the thickness of the outer conductive layer 3 is controlled to be 50 nm or greater, the obtained composite material has good electronic conductivity. When the thickness of the outer conductive layer 3 is controlled to be 2000 nm or less, the obtained composite material has high capacity. Preferably, the thickness of the outer conductive layer 3 is specifically 80 nm to 1000 nm.

In some embodiments, the outer conductive layer 3 accounts for 0.1 wt % to 10 wt % of the composite material. Optionally, the mass fraction of the outer conductive layer 3 in the composite material may specifically be 0.1wt%, 0.5wt%, 1wt%, 3wt%, 5wt%, 8wt%, 10wt%, etc., and is not limited herein.

In a second aspect, the present application also provides a preparation method of the above composite material. FIG. 2 is a schematic flow chart of the preparation method of the composite material provided by the present application. As shown in FIG. 2, the preparation method includes steps S100∼S300.

In step S100, a mixture including a silicon oxide and a lithium source is calcined in a protective atmosphere or a vacuum environment to obtain a lithium-containing silicon oxide. The silicon oxide has a chemical formula SiOₓ, where 0<x≤2.

In some embodiments, the lithium source includes, but is not limited to, at least one of lithium hydride, alkyl lithium, lithium metal, lithium aluminum hydride, lithium amide, and lithium borohydride.

In some embodiments, the molar ratio of the silicon oxide to the lithium source is (0.5~5):1. Optionally, the molar ratio of the silicon oxide to the lithium source may specifically be 0.5:1, 1:1, 2:1, 3:1, 4:1, 5:1, etc., and is not limited here. If the molar ratio of the silicon oxide to the lithium source is too high and exceeds the above range, the obtained composite material has poor first discharge specific capacity and cycling stability. If the molar ratio of the silicon oxide to the lithium source is lower than the above range, the obtained composite material has low initial Coulombic efficiency.

In some embodiments, during the preparation of the lithium-containing silicon oxide, the calcination is performed in a protective atmosphere including at least one of helium, neon, argon, and nitrogen, the calcination temperature is 500°C~1000°C, and the calcination duration is 2h~10h.

Optionally, the calcination temperature may specifically be 500°C, 600°C, 700°C, 800°C, 900°C, 1000°C, etc. The calcination duration may specifically be 2h∼10h, such as 2h, 3h, 4h, 5h, 6h, 7h, 8h, 9h, 10h, etc., and is not limited here. The calcination temperature is controlled above 500°C and the calcination duration is controlled above 2h, the calcination is complete, and the prepared composite material has a complete structure. If the calcination temperature is controlled below 1000°C and the calcination duration is controlled below 10h, the agglomeration due to the calcination does not easily occur, thereby improving the performance of the composite material.

It can be understood that step S100 can be omitted, and a lithium-containing silicon oxide that meets the requirements can be directly selected.

In step S200, starting materials including the above lithium-containing silicon oxide, an X source, and a Y source are mixed and then sintered to obtain a composite material, where X is a metal element and Y is a non-metal element.

In some embodiments, the above X source includes at least one of X-containing oxides and X-containing salt compounds, such as at least one of aluminum oxide, aluminum chloride, zinc sulfate, zinc chloride, magnesium oxide, magnesium chloride, calcium oxide, calcium chloride, copper oxide, copper sulfate, beryllium oxide, beryllium chloride, tin oxide, tin sulfate, lanthanum oxide, lanthanum chloride, titanium oxide, and titanium chloride.

In some embodiments, the above Y source includes at least one of Y-containing oxides and Y-containing salt compounds, such as at least one of phosphorus pentoxide, ammonium phosphate, ammonium borate, boron oxide, lithium sulfate, and sulfuric anhydride.

In the above solution, the lithium-containing silicon oxide is reacted with at least one of metal-containing oxides and metal-containing salt compounds and at least one of non-metal-containing oxides and non-metal-containing salt compounds, to produce a stable hydrophobic coating layer 2 in situ on the surface of the lithium-containing silicon oxide.

In some embodiments, the molar ratio of the lithium-containing silicon oxide, the X source, and the Y source is 1:(0.001∼0.1):(0.001-0.1).

Optionally, the molar ratio of the above lithium-containing silicon oxide, the X source, and the Y source may specifically be 1:0.001:0.001, 1:0.003:0.005, 1:0.005:0.01, 1:0.01:0.006, 1:0.008:0.003, 1:0.005:0.001, 1:0.01:0.01, 1:0.03:0.05, 1:0.05:0.08, 1:0.1:0.05, 1:0.07:0.03, 1:0.05:0.01, 1:0.1:0.1, etc., and is not limited here.

In some embodiments, the molar ratio of the lithium-containing silicon oxide, the X source, and the Y source is specifically 1:(0.005∼0.08):(0.005∼0.08). If the proportion of the X source and the Y source in the starting materials is extremely high, the initial Coulombic efficiency and cycling stability of the finally obtained composite material are affected, so that the obtained composite material has poor initial Coulombic efficiency and cycling stability. If the proportion of the X source and the Y source in the starting materials is extremely low, the inner core 1 cannot be effectively protected.

In some embodiments, the sintering temperature is 300°C to 800°C, and the sintering duration is 2h to 6h. Optionally, the sintering temperature can specifically be 300°C, 400°C, 500°C, 600°C, 700°C, 800°C, etc., the sintering duration can specifically be 2h, 3h, 4h, 5h, 6h, etc., and they are not limited here. The prepared composite material obtained under the sintering temperature and sintering duration has good performance. The sintering temperature is controlled below 800°C and the sintering duration is controlled below 6h, so that the sintering process is easy to control, and the obtained composite material has little change in shape and size. The sintering temperature is controlled to be 300°C or higher and the sintering duration is controlled to be 2h or longer, so that the composite material meeting the required performance requirements can be prepared.

In step S300, the above composite material is coated with carbon to form an outer conductive layer 3 on the surface of the composite material.

In some embodiments, the method of carbon coating in the present application includes: mixing and heat-treating starting materials including a sintered product and an organic carbon source in a protective atmosphere or a vacuum environment.

In some embodiments, the above carbon coating method includes: mixing and heat-treating starting materials including the above sintered product and an organic carbon source in a protective atmosphere or a vacuum environment.

In some embodiments, the above carbon coating can be exemplified by gas-phase carbon coating and/or solid-phase carbon coating.

In some embodiments, the carbon coating of the present application adopts gas-phase carbon coating, of which the specific method includes: heating the above sintered product to 600°C~1000°C in a protective atmosphere, feeding an organic carbon source gas, and holding the temperature for 0.5h~10h followed by cooling. The organic carbon source gas can be selected from hydrocarbons (such as alkanes, cycloalkanes, alkenes, alkynes, aromatic hydrocarbons, etc.), specifically, for example, at least one of methane, ethylene, acetylene, and benzene.

In some embodiments, the temperature for the heat treatment in the gas-phase carbon coating may specifically be 600°C, 700°C, 800°C, 900°C, 1000°C, etc., the holding time of the heat treatment may specifically be 0.5 h, 1.5 h, 2.5 h, 3.5 h, 4.5 h, 5.5 h, 6.5 h, 7.5 h, 8.5 h, 9.5 h, 10 h, etc., and they are not limited here. Preferably, the temperature for the heat treatment can be 700~900°C, and the holding time of the heat treatment can be 3h~9h.

In some embodiments, the carbon coating of the present application adopts solid phase carbon coating in which the starting materials including the sintered product and an organic carbon source are mixed and heat-treated in a protective atmosphere or a vacuum environment, and the specific method thereof includes: the above sintered product is fused with the organic carbon source for 0.5 h or longer, and then the obtained carbon mixture is carbonized at 600°C∼1000°C for 2 h~6 h followed by cooling. The carbon source can be selected from at least one of polyolefins, resins, rubbers, saccharides (such as glucose, sucrose, starch, and cellulose, etc.), organic acids, and asphalt.

In some embodiments, the temperature for the heat treatment in the solid-phase carbon coating may specifically be 600°C, 700°C, 800°C, 900°C, 1000°C, etc., the holding time of the heat treatment may specifically be 2h, 3h, 4h, 5h, 6h, etc., and they are not limited here. Preferably, the temperature for the heat treatment can be 700∼900°C, and the holding time of the heat treatment can be 3h~5h.

In some embodiments, the fusion is preferably performed in a fusion machine at a rotation speed of 500 r/min~3000 r/min.

In some embodiments, the rotation speed of the fusion machine may specifically be 500 r/min, 800 r/min, 1000 r/min, 1500 r/min, 2000 r/min, 2500 r/min, 3000 r/min, etc., and is not limited herein. Preferably, the rotation speed of the fusion machine may be 1000-3000 r/min.

The width of clearance of cutters of the fusion machine can be determined according to the needs, for example, it is 0.5 cm.

In some embodiments, the protective atmosphere in the above carbon coating method can be selected from at least one of helium, neon, argon, and nitrogen.

In some embodiments, the mass ratio of the outer conductive layer 3 to the sintered product is 1:(1~1000).

Optionally, the mass ratio of the outer conductive layer 3 to the sintered product may specifically be 1:1, 1:10, 1:30, 1:50, 1:80, 1:100, 1:150, 1:200, 1:250, 1:300, 1:350, 1:400, 1:450, 1:500, 1:550, 1:600, 1:650, 1:700, 1:750, 1:800, 1:850, 1:900, 1:950, 1:1000, etc., and is not limited here. Preferably, the mass ratio of the outer conductive layer 3 to the sintered product may be 1:(10-500).

In some embodiments, the thickness of the obtained outer conductive layer 3 is 50 nm to 2000 nm. Optionally, the thickness of the outer conductive layer 3 may specifically be 50 nm, 100 nm, 200 nm, 300 nm, 400 nm, 500 nm, 600 nm, 700 nm, 800 nm, 900 nm, 1000 nm, 1100 nm, 1200 nm, 1300 nm, 1400 nm, 1500 nm, 1600 nm, 1700 nm, 1800 nm, 1900 nm, 2000 nm, etc., and is not limited here, such that the electrical conductivity of the composite material is guaranteed without deterioration due to the presence of the hydrophobic coating layer 2. When the thickness of the outer conductive layer 3 is controlled to be 50 nm or greater, the obtained composite material has good electronic conductivity. When the thickness of the outer conductive layer 3 is controlled to be 2000 nm or less, the obtained composite material has high capacity. Preferably, the thickness of the outer conductive layer 3 is specifically 80 nm to 1000 nm.

It can be understood that the negative electrode material can be obtained directly without performing step S300, that is, without coating. Alternatively, according to different performance requirements, the carbon layer can be replaced with a coating layer of other materials, where the material of the coating layer may be a polymer material or a metal oxide.

In a third aspect, the present application provides a negative electrode material including the above composite material or a composite material prepared by the above preparation method.

In a fourth aspect, the present application also provides a lithium ion battery including the above composite material.

The embodiments of the present application will be described in detail below with reference to specific examples, but those skilled in the art will understand that the following examples are only used to illustrate the present application and should not be regarded as limiting the scope of the present application. If the specific conditions are not indicated in the examples, the examples are carried out according to the conventional conditions or the conditions suggested by the manufacturer. The reagents or instruments used without the manufacturer's indication are conventional products that are commercially available.

### Example 1:

(1) Silicon monoxide SiO and lithium hydride were thoroughly mixed in a molar ratio of 1.5:1 and then calcined at 800°C for 4 h under nitrogen protection to obtain a lithium-containing silicon oxide.
(2) The lithium-containing silicon oxide obtained in step (1), titanium oxide, and ammonium phosphate were thoroughly mixed in a molar ratio of 1:0.01:0.01 and then sintered at 700°C for 4 h to obtain a sintered product of the lithium-containing silicon oxide coated with a hydrophobic coating layer 2.
(3) the sintered product obtained in step (2) was placed in a tubular furnace and heated to 600°C under nitrogen protection, and acetylene was fed, where the mass ratio of acetylene and the sintered product was 1:2, and the temperature was held for 10 h and then cooled to form an outer conductive layer 3 of carbon coating on the outer surface of the hydrophobic coating layer 2, thereby obtaining a composite material.

### Example 2:

(1) Silicon monoxide SiO and lithium hydride were thoroughly mixed in a molar ratio of 0.5:1 and then calcined at 600°C for 6 h under nitrogen protection to obtain a lithium-containing silicon oxide.
(2) The lithium-containing silicon oxide obtained in step (1), titanium oxide, and ammonium phosphate were thoroughly mixed in a molar ratio of 1:0.1:0.1 and then sintered at 300°C for 6 h to obtain a sintered product of the lithium-containing silicon oxide coated with a hydrophobic coating layer 2.
(3) The sintered product obtained in step (2) was placed in a tubular furnace and heated to 800°C under nitrogen protection, and acetylene was fed, where the mass ratio of acetylene to the sintered product was 1:2, and the temperature was held for 5 h and then cooled to form an outer conductive layer 3 of carbon coating on the outer surface of the hydrophobic coating layer 2, thereby obtaining a composite material.

### Example 3:

(1) Silicon monoxide SiO and lithium hydride were thoroughly mixed in a molar ratio of 5:1 and then calcined at 1000°C for 2 h under nitrogen protection to obtain a lithium-containing silicon oxide.
(2) The lithium-containing silicon oxide obtained in step (1), titanium oxide, and ammonium phosphate were thoroughly mixed in a molar ratio of 1:0.04:0.06 and then sintered at 500°C for 4 h to obtain a sintered product of the lithium-containing silicon oxide coated with a hydrophobic coating layer 2.
(3) The sintered product obtained in step (2) was placed in a tubular furnace and heated to 1000°C under nitrogen protection, and acetylene was fed, where the mass ratio of acetylene to the sintered product was 1:2, and the temperature was held for 1 h and then cooled to form an outer conductive layer 3 of carbon coating on the outer surface of the hydrophobic coating layer 2, thereby obtaining a composite material.

### Example 4:

(1) Silicon oxide SiO_{1.5} and lithium borohydride were thoroughly mixed in a molar ratio of 4:1 and then calcined at 700°C for 7 h under nitrogen protection to obtain a lithium-containing silicon oxide.
(2) The lithium-containing silicon oxide obtained in step (1), aluminium oxide, and ammonium borate were thoroughly mixed in a molar ratio of 1:0.001:0.002 and then sintered at 800°C for 2 h to obtain a sintered product of the lithium-containing silicon oxide coated with a hydrophobic coating layer 2.
(3) The sintered product obtained in step (2) was placed in a tubular furnace and heated to 900°C under argon protection, and acetylene was fed, where the mass ratio of acetylene to the sintered product was 1:3, and the temperature was held for 2 h and then cooled to form an outer conductive layer 3 of carbon coating on the outer surface of the hydrophobic coating layer 2, thereby obtaining a composite material.

### Example 5:

(1) Silicon oxide SiO_{0.5} and lithium amide were thoroughly mixed in a molar ratio of 3:1 and then calcined at 700°C for 8 h under nitrogen protection to obtain a lithium-containing silicon oxide.
(2) The lithium-containing silicon oxide obtained in step (1), zinc oxide, and lithium sulfate were thoroughly mixed in a molar ratio of 1:0.05:0.06 and then sintered at 400°C for 5 h to obtain a sintered product of the lithium-containing silicon oxide coated with a hydrophobic coating layer 2.
(3) The sintered product obtained in step (2) was placed in a tubular furnace and heated to 700°C under argon protection, and acetylene was fed, where the mass ratio of acetylene to the sintered product was 1:4, and the temperature was held for 8 h and then cooled to form an outer conductive layer 3 of carbon coating on the outer surface of the hydrophobic coating layer 2, thereby obtaining a composite material.

### Example 6:

Example 6 was implemented in the same manner as Example 1 with the exception that step (3) was omitted.

### Example 7:

Example 7 was implemented in the same manner as Example 2 with the exception that step (3) was omitted.

### Example 8:

Example 8 was implemented in the same manner as Example 3 with the exception that step (3) was omitted.

### Example 9:

Example 9 was implemented in the same manner as Example 1 with the exception that the molar ratio of silicon monoxide to lithium hydride in step (1) was changed from 1.5:1 to 8:1.

### Example 10:

Example 10 was implemented in the same manner as Example 1 with the exception that the molar ratio of silicon monoxide to lithium hydride in step (1) was changed from 1.5:1 to 0.2:1.

### Example 11:

Example 11 was implemented in the same manner as Example 1 with the exception that the molar ratio of the lithium-containing silicon oxide, titanium oxide, and ammonium phosphate in step (2) was changed from 1:0.01:0.01 to 1:0.15:0.15.

### Example 12:

Example 12 was implemented in the same manner as Example 1 with the exception that the molar ratio of the lithium-containing silicon oxide, titanium oxide, and ammonium phosphate in step (2) was changed from 1:0.01:0.01 to 2:0.001:0.001.

### Comparative Example 1:

Comparative Example 1 was implemented in the same manner as Example 1 with the exception that step (2) was omitted.

### Comparative Example 2:

Comparative Example 2 was implemented in the same manner as Example 1 with the exception that steps (2) and (3) were omitted.

### Comparative Example 3:

The difference between Comparative Example 3 and Example 1 is that:
(1) a silicon oxide, titanium oxide and ammonium phosphate were thoroughly mixed in a molar ratio of 1 :0.01 :0.01 and then sintered at 700°C for 4 h to obtain a sintered product of the silicon oxide coated with a coating layer, and
(2) the sintered product obtained in step (1) was placed in a tubular furnace and heated to 600°C under nitrogen protection, and acetylene was fed, where the mass ratio of acetylene to the sintered product was 1:2, and the temperature was held for 10 h and then cooled to form an outer conductive layer of carbon coating on the outer surface of the coating layer to obtain a composite material.

The coating layer of the composite material included compound SiO₂Ti_{0.2} and compound SiO₂P_{0.2} of which the mass ratio is 1:1, and the thickness of the coating layer was 43 nm.
1. Material characterization: the negative electrode materials obtained in the above examples and comparative examples were characterized. The test method is as follows. The cut surface of the material particles was detected using a field emission scanning electron microscope S4800 to firstly measure the thickness of the hydrophobic coating layer, and then an element scanning analysis was conducted using X-ray energy spectrometer Oxford X-MAXN to determine the ratio of each of X and Y elements to Si element in the hydrophobic coating layer. The ratio values of X element/Si element and Y element/Si element of arbitrarily selected 20 particles were averaged and one significant digit after the decimal point was retained to obtain values as the final ratio values of X element/Si element and Y element/Si element in the hydrophobic coating layer. Finally, the composition and ratio of the compound M and the compound N in the hydrophobic coating layer were determined according to the ratio of Li, Si, and O elements in the inner core of the material and the structural composition of the lithium-containing silicon oxide of the inner core. The test results are shown in Table 1.
2. Electrochemical performance test

### (1) Initial Coulombic efficiency test:

a. preparation of lithium ion battery: the composite materials prepared in the above examples and comparative examples were used as negative electrode active materials, and the negative electrode active material, conductive carbon black, CMC, and SBR were thoroughly mixed in a mass ratio of 75:15:4:6 and then applied on copper foil to prepare a negative electrode sheet. A metal lithium sheet as a positive electrode sheet and PP/PE as a separator were used to make a button battery.
b. the button battery was detected by a 5V/10mA battery tester available from LAND Electronic Co. Ltd or Neware Technology Limited with a voltage of 1.5V and a current of 0.1C. Initial Coulombic efficiency = first charge specific capacity/first discharge specific capacity.

### (2) Cycling performance test:

a. preparation of lithium ion battery: each of the composite materials prepared in the above examples and comparative examples and graphite were mixed in a mass ratio of 15:85 to obtain a negative electrode active material, then the negative electrode active material, conductive carbon black, CMC, and SBR were thoroughly mixed in a mass ratio of 92:4:2:2 and applied on copper foil to prepare a negative electrode sheet. A metal lithium sheet as a positive electrode sheet and PP/PE as a separator were used to make a button battery.
b. the button battery was detected by a 5V/10mA battery tester available from LAND Electronic Co. Ltd or Neware Technology Limited with a voltage of 1.5V and a current of 0.1C. 50-cycle retention rate = specific capacity at 50th discharge/specific capacity at first discharge.

### (3) Rate capability test:

a. preparation of lithium ion battery: each of the composite materials prepared in the above examples and comparative examples and graphite were mixed in a mass ratio of 15:85 to obtain a negative electrode active material, then the negative electrode active material, conductive carbon black, CMC, and SBR were thoroughly mixed in a mass ratio of 92:4:2:2 and applied on copper foil to prepare a negative electrode sheet. A metal lithium sheet as a positive electrode sheet and PP/PE as a separator were used to make a button battery.
b. the button battery was detected by a 5V/10mA battery tester available from LAND Electronic Co. Ltd or Neware Technology Limited with a voltage of 1.5V and a current of 0.1C and 3C, respectively. 3C/0.1C = discharge specific capacity at current of 3C/discharge specific capacity at current of 0.1C.

The results of the above electrochemical performance test are shown in Table 2 below.

3. The composite materials prepared in the above examples and comparative examples were used as negative electrode active materials, and the negative electrode active material, conductive carbon black, CMC, and SBR were thoroughly mixed in a mass ratio of 75:15:4:6 to make a slurry. Then, the stability of each slurry was determined.

Method for determination of stability of slurry: after the slurry is allowed to stand for 4 h, if bubbles appear in the slurry, the slurry is determined as being unstable. After the slurry is allowed to stand for 12 h, if the slurry settles, the slurry is determined as being unstable.

**Table 1**

| | Compound M | Compound N | Mass ratio of Compound M/ Compound N | Thickness of hydrophobic coating layer (nm) |
|---|---|---|---|---|
| Example 1 | Li₂SiO₃Ti_{0.2} | Li₂SiO₃P_{0.2} | 1:1 | 50 |
| Example 2 | Li₄SiO₅Ti2 | Li₄SiO₅P₂ | 1:1 | 183 |
| Example 3 | Li₂SiO₅Ti_{0.5} | Li₂SiO₅P_{0.5} | 4:5 | 121 |
| Example 4 | Li₂SiO₅Al_{0.2} | Li₂SiO₅P_{0.2} | 5:8 | 10 |
| Example 5 | Li₂SiO₅Zn_{0.5} | Li₂SiO₅S_{0.5} | 11:12 | 55 |
| Example 6 | Li₂SiO₃Ti_{0.2} | Li₂SiO₃P_{0.2} | 1:1 | 51 |
| Example 7 | Li₄SiO₅Ti2 | Li₄SiO₅P₂ | 1:1 | 191 |
| Example 8 | Li₂SiO₅Ti_{0.5} | Li₂SiO₅P_{0.5} | 4:5 | 126 |
| Example 9 | Li_{0.5}SiO₅Ti_{0.2} | Li_{0.5}SiO₅P_{0.2} | 1:1 | 46 |
| Example 10 | Li₅SiO₄Ti_{0.2} | Li₅SiO₄P_{0.2} | 1:1 | 50 |
| Example 11 | Li₂SiO₃Ti_{0.2} | Li₂SiO₃P_{0.2} | 1:1 | 563 |
| Example 12 | Li₂SiO₃Ti_{0.01} | Li₂SiO₃P_{0.01} | 1:1 | 1 |
| Comparative Example 1 | / | / | / | / |
| Comparative Example 2 | / | / | / | / |
| Comparative Example 3 | SiO₂Ti_{0.2}(not belonging to compound M) | SiO₂P_{0.2}(not belonging to compound N) | 1:1 | 43 |

**Table 2**

| | First discharge specific capacity (mAh/g) | Initial Coulombic efficiency (%) | 50-Cycle Retention rate (%) | 3C/0.1 C(%) | Slurry stability |
|---|---|---|---|---|---|
| Example 1 | 1453.9 | 87.3 | 89.3 | 88.7 | stable |
| Example 2 | 1413.1 | 89.5 | 88.1 | 84.9 | stable |
| Example 3 | 1432.1 | 86.5 | 87.5 | 82.6 | stable |
| Example 4 | 1465.7 | 86.5 | 89.0 | 85.8 | stable |
| Example 5 | 1443.6 | 87.0 | 88.3 | 84.3 | stable |
| Example 6 | 1411.2 | 83.5 | 82.3 | 84.3 | stable |
| Example 7 | 1405.8 | 84.1 | 81.4 | 83.0 | stable |
| Example 8 | 1410.1 | 82.3 | 80.5 | 82.1 | stable |
| Example 9 | 1427.5 | 78.9 | 81.2 | 80.1 | stable |
| Example 10 | 1236.8 | 89.1 | 70.3 | 77.9 | stable |
| Example 11 | 1046.1 | 79.5 | 69.5 | 75.8 | stable |
| Example 12 | 1446.5 | 87.1 | 85.5 | 73.9 | unstable |
| Comparative Example 1 | 1426.1 | 87.1 | 84.5 | 73.4 | unstable |
| Comparative Example 2 | 1105.6 | 85.1 | 56.0 | 43.4 | unstable |
| Comparative Example 3 | 1501.9 | 73.2 | 63.0 | 53.1 | stable |

It should be noted that in Example 1, if titanium oxide is replaced with at least one of oxides and/or salts of vanadium, germanium, zinc, tin, aluminum, lanthanum, magnesium, beryllium, antimony, silver, calcium, and copper or at least one of titanium salts, ammonium phosphate is replaced with at least one of oxides, acids, and salts of boron, nitrogen, and sulfur or an oxide of phosphorus, and the molar ratio of the lithium-containing silicon oxide, X source, and Y source is replaced with any other molar ratio in the range of 1:(0.001∼0.1):(0.001∼0.1), the stability of the obtained slurry is equivalent to that of Example 1.

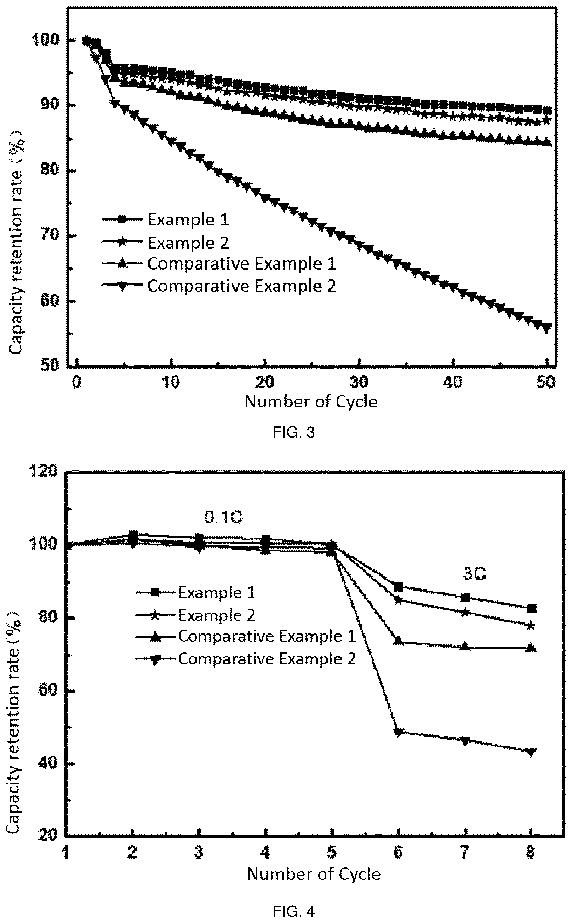

FIG. 3 is a graph showing cycling performance of corresponding batteries that are assembled using composite materials obtained in Example 1, Example 2, Comparative Example 1, and Comparative Example 2 under different current densities (0.1C for the first cycle, 0.2C for the second cycle, 0.5C for the third cycle, and 1C for the 4th to 50th cycles).

FIG. 4 a graph showing the different rate capabilities of corresponding batteries that are assembled using composite materials obtained in Example 1, Example 2, Comparative Example 1, and Comparative Example 2.

As shown in FIG. 3 and FIG. 4, it can be seen from the above electrochemical performance test results that the composite materials prepared in Examples 1 to 8 of the present application all have good electronic conductivity, high initial Coulombic efficiency, good cycling stability, and high rate capability. In Examples 1 to 5, since an outer conductive layer of carbon coating is formed on the outer surface of the hydrophobic coating layer 2, the electrical conductivity, initial Coulombic efficiency, cycling stability, and rate capability of corresponding batteries that are assembled using the composite materials prepared in Examples 1 to 5 are superior to those of the corresponding batteries that are assembled using the composite materials prepared in Examples 6-8.

In the above Example 9, the molar ratio of silicon monoxide to lithium hydride is too high relative to that of Example 1, and the obtained composite material has low initial Coulombic efficiency. In the above Example 10, the molar ratio of silicon monoxide to lithium hydride is too low relative to that of Example 1, and the obtained composite material has decreased first discharge specific capacity.

In the above Example 11, the molar ratios of titanium oxide to the lithium-containing silicon oxide and ammonium phosphate to the lithium-containing silicon oxide are too high relative to those of Example 1, the active components of the material are reduced, the electrical conductivity is deteriorated, and therefore, the first discharge specific capacity and the initial Coulombic efficiency are low. In the above Example 12, the molar ratios of titanium oxide to the lithium-containing silicon oxide and ammonium phosphate to the lithium-containing silicon oxide are too low relative to those of Example 1, so that an effective protective layer cannot be formed. Therefore, the obtained slurry is unstable and cannot effectively buffer the expansion of the lithium-containing silicon-oxygen material during cycling, and consequently its 50-cycle retention rate is lower than that of Example 1, and its rate capability of 3C/0.1C is lower than that of Example 1.

The above Comparative Example 1 is a composite material with an inner core of lithium-containing silicon oxide directly coated with carbon, which lacks the intermediate hydrophobic coating layer compared with Example 1. The obtained slurry is unstable and cannot effectively buffer the expansion of the lithium-containing silicon-oxygen material during cycling, and consequently its 50-cycle retention rate is lower than that of Example 1, and its rate capability of 3C/0.1C is lower than that of Example 1.

The above Comparative Example 2 lacks a hydrophobic coating layer and an outer conductive layer of carbon coating compared with Example 1. The obtained slurry is unstable and cannot effectively buffer the expansion of the lithium-containing silicon-oxygen material during cycling, and the obtained composite material has poor electric conductivity. Therefore, its first discharge specific capacity is lower than that of Example 1, its initial Coulombic efficiency is lower than that of Example 1, its 50-cycle retention rate is lower than that of Example 1, and its rate capability of 3C/0.1C is lower than that of Example 1.

The above Comparative Example 3 does not use a pre-lithiated silicon-oxygen material, and the silicon oxide is directly reacted with titanium oxide and ammonium phosphate. Consequently, although the final negative electrode material can have a high first discharge specific capacity, the reaction between silicon oxide and the electrolyte consumes a large amount of active lithium ions, so that the initial Coulombic efficiency of the battery is greatly reduced compared with that of Example 1. The volume of the silicon-oxygen material expands during cycling of the battery, and the coating layer cannot effectively buffer the expansion of the silicon-oxygen material during cycling, and consequently its 50-cycle retention rate is lower than that of Example 1, and its rate capability of 3C/0.1C is lower than that of Example 1.

Finally, it should be noted that the above examples are only used to illustrate the technical solutions of the present application, but not to limit them. Although the present application has been described in detail with reference to the foregoing examples, those of ordinary skill in the art should understand that the technical solutions described in the foregoing examples can still be modified, or some or all of the technical features thereof can be equivalently substituted. However, these modifications or substitutions do not make the essence of the corresponding technical solutions deviate from the scope of the technical solutions of the examples of the present application.

Furthermore, those skilled in the art can understand that although some of the examples herein include certain features, but not others, included in other examples, combinations of features of different examples are intended to be within the scope of this application and form different examples. For example, in the claims, any of the claimed embodiments may be used in any combination. The information disclosed in the Background section is only for enhancement of understanding of the general background of the present application and should not be regarded as an acknowledgement or any form of suggestion that this information forms the prior art already known to a person skilled in the art.

## Claims

1. A composite material, **characterized in that** the composite material is of a core-shell structure, the core-shell structure comprises:
an inner core, comprising a lithium-containing silicon oxide; and
a hydrophobic coating layer, formed on at least part of a surface of the inner core and comprising a compound M having a chemical formula LiₐSiO_{b}X_{c} and a compound N having a chemical formula Li_{d}SiOₑY_{f}, wherein 0<a≤5, 0<b≤5, 0<c≤5, 0<d≤5, 0<e≤5, 0<f≤5, X is a metal element, and Y is a non-metal element.

2. The composite material according to claim 1, wherein the composite material has at least one of following items a to g:
a. the inner core has a diameter ϕ that satisfies: 0 µm<ϕ≤500 µm;
b. the lithium-containing silicon oxide comprises at least one of a silicon-, oxygen-, and lithium-containing compound, a composite of a silicon-, oxygen-, and lithium-containing compound and silicon, a composite of an oxygen- and lithium-containing compound and silicon, and a composite of an oxygen- and silicon-containing compound and lithium,
wherein the silicon-, oxygen-, and lithium-containing compound comprises at least one of Li₂SiO₃, Li₂Si₂O₅, Li₄SiO₄, Li₆Si₂O₇, and Li₂Si₅O₁₁;
c. the hydrophobic coating layer has a thickness of 2 nm to 500 nm;
d. the hydrophobic coating layer accounts for 0.1 wt% to 10 wt% of the composite material;
e. a mass ratio of the compound M to the compound N in the hydrophobic coating layer is (1~100):(1∼100);
f. the metal element comprises at least one of vanadium, germanium, zinc, tin, aluminum, lanthanum, magnesium, beryllium, antimony, silver, calcium, copper, and titanium; and
g. the non-metal element comprises at least one of phosphorus, boron, nitrogen, and sulfur.

3. The composite material according to claim 2, wherein the composite material has at least one of following items a to c:
a. the composite material further comprises an outer conductive layer formed on a surface of the hydrophobic coating layer and containing a carbon material;
b. the composite material further comprises an outer conductive layer formed on the surface of the hydrophobic coating layer and having a thickness of 50 nm to 2000 nm; and
c. the composite material further comprises an outer conductive layer formed on the surface of the hydrophobic coating layer and accounting for 0.1 wt% to 10 wt% of the composite material.

4. A preparation method of a composite material, **characterized by** comprising:
calcining a mixture comprising a silicon oxide and a lithium source in a protective atmosphere or a vacuum environment, so as to obtain a lithium-containing silicon oxide; and
mixing starting materials comprising the lithium-containing silicon oxide, an X
source, and a Y source and sintering the starting materials, so as to obtain the composite material, wherein X is a metal element and Y is a non-metal element.

5. The preparation method of a composite material according to claim 4, wherein the preparation method has at least one of following items a to f:
a. the silicon oxide has a chemical formula SiOₓ, where 0<x<2;
b. the lithium source comprises at least one of lithium hydride, alkyl lithium, lithium metal, lithium aluminum hydride, lithium amide, and lithium borohydride;
c. a molar ratio of the silicon oxide to the lithium source is 0.5:1~5:1;
d. the calcining is carried out in a protective atmosphere comprising at least one of helium, neon, argon, and nitrogen;
e. a calcining temperature is 500°C~1000°C, and a calcining duration is 2 h∼10 h; and
f. the lithium-containing silicon oxide comprises at least one of a silicon-, oxygen-, and lithium-containing compound, a composite of a silicon-, oxygen-, and lithium-containing compound and silicon, a composite of an oxygen- and lithium-containing compound and silicon, and a composite of an oxygen- and silicon-containing compound and lithium,
wherein the silicon-, oxygen-, and lithium-containing compound comprises at least one of Li₂SiO₃, Li₂Si₂O₅, Li₄SiO₄, Li₆Si₂O₇, and Li₂Si₅O₁₁.

6. The preparation method of a composite material according to claim 4, wherein the preparation method has at least one of following items a to d:
a. the X source comprises at least one of X-containing oxides and X-containing salt compounds;
b. the Y source comprises at least one of Y-containing oxides and Y -containing salt compounds;
c. a molar ratio of the lithium-containing silicon oxide, the X source, and the Y source is 1:(0.001~0.1):(0.001-0.1); and
d. a sintering temperature is 300°C to 800°C, and a sintering durstion is 2h to 6h.

7. The preparation method of a composite material according to claim 6, wherein the preparation method has at least one of following items a to c:
a. the preparation method of a composite material further comprises: coating a sintered product with carbon to form an outer conductive layer;
b. the preparation method of a composite material further comprises: coating the sintered product with carbon to form an outer conductive layer having a thickness of 50 nm to 2000 nm; and
c. the preparation method of a composite material further comprises: coating the sintered product with carbon to form an outer conductive layer, wherein a carbon coating method comprises: mixing starting materials comprising the sintered product and an organic carbon source and performing heat treatment on the starting materials in a protective atmosphere or a vacuum environment.

8. The preparation method of a composite material according to claim 7, wherein the preparation method has at least one of following items a to c:
a. the organic carbon source comprises at least one of hydrocarbons, resins, rubbers, saccharides, organic acids, and asphalt;
b. a heat treatment temperature is 600°C~1000°C, and a heat treatment duration is 0.5 h~10 h; and
c. a mass ratio of the outer conductive layer to the sintered product is 1: 1∼1:1000.

9. A negative electrode material, **characterized by** comprising the composite material according to any one of claims 1 to 3 or a composite material prepared by the preparation method according to any one of claims 4 to 8.

10. A lithium ion battery, **characterized by** comprising the negative electrode material according to claim 9.
